# EUROPÄISCHE PATENTSCHRIFT

(11) **EP 3 319 827 B1**
(45) Veröffentlichungstag und Bekanntmachung des Hinweises auf die Patenterteilung: **01.01.2020**
(21) Anmeldenummer: 16734194.0
(22) Anmeldetag: 01.07.2016
(51) Int. Cl.: B60J 7/02

(54) **DACHMODUL FÜR EINEN KRAFTWAGEN**
ROOF MODULE FOR A MOTOR VEHICLE
MODULE DE TOIT POUR VÉHICULE AUTOMOBILE

(30) Priorität: 08.07.2015 DE 102015008841
(43) Veröffentlichungstag der Anmeldung: 16.05.2018
(73) Patentinhaber: Daimler AG, 70372 Stuttgart (DE)
(72) Erfinder: DEMMER, Achim, 71106 Magstadt (DE); KOBER, Peer-Olaf, 71120 Grafenau (DE); RENZ, Uwe, 72141 Walddorfhäslach (DE)
(74) Vertreter: JENSEN & SON
(86) Internationale Anmeldenummer: PCT/EP2016/001124
(87) Internationale Veröffentlichungsnummer: WO 2017/005352

(56) Entgegenhaltungen:
- EP-A2- 0 455 975
- DE-A1-102012 010 999
- DE-A1-102014 013 582

## Beschreibung

Die Erfindung betrifft ein Dachmodul für einen Kraftwagen, gemäß Oberbegriff des Anspruchs 1. Des Weiteren betrifft die Erfindung ein Baukastensystem für ein solches Dachmodul gemäß Oberbegriff des Anspruchs 6.

Aus der DE 102 28 410 A1 geht ein Dachmodul für Fahrzeuge hervor. Dieses dient dazu, ein Fahrzeugdach mit verschiedenen Bauvarianten von festen, geschlossenen oder öffenbaren Dächern versehen zu können. Das Dachmodul umfasst einen Rahmen, welcher aus einer Mehrzahl von Rahmenelementen zusammengesetzt ist. Eines dieser Rahmenelemente ist dabei ein vollständiger, in der Form einer Acht ausgebildeter Rahmen, welcher um weitere Rahmenelemente ergänzt werden kann. Durch den Rahmen wird dabei üblicherweise wenigstens ein Deckelelement aufgenommen, welches das Dachmodul beziehungsweise Fahrzeugdach verkleidet. Je nach Ausführungsform, also ob es sich beispielsweise um ein festes, nicht öffenbares Dach oder um ein solches mit wenigstens einem Deckelelement (Schiebe-/Hebedach, Panoramadach oder Lamellendach) handelt, kommen somit ein oder mehrere Deckelelemente, welche öffenbar beziehungsweise nicht öffenbar sind, zum Einsatz.

In Folge der Diversifizierung im Kraftwagenbau werden derartige Dachmodule bei unterschiedlichsten Bauvarianten innerhalb einer Fahrzeugbaureihe oder über mehrere Fahrzeugbaureihen hinweg benötigt. Insoweit ist eine einfache Anpassung des Dachmoduls an unterschiedliche Größen und Geometrien von Rohbauöffnungen, in welche das jeweilige Dachmodul eingesetzt werden soll, wünschenswert. Außerdem ist es wünschenswert, eine möglichst große Vereinheitlichung beziehungsweise Integration über alle Dachmodule hinweg zu erreichen.

Aus der US 7 922 242 B2 geht ein Dachmodul hervor, das Längsrahmenelemente aufweist, welche über vordere und hintere Querrahmenelemente zu einem Rahmen miteinander verbunden sind. In die Längsrahmenelemente sind Führungsschienen für einen verlagerbaren Deckel zum Verschließen einer Öffnung des Daches integriert.

Sämtliche Rahmenteile werden mittels Verkleidungsteilen von der Außenseite des Kraftwagens her verblendet. Eine Vormontage von Mechanikkomponenten an Teilen der Rahmenelemente ist nicht möglich, weil jeder fahrzeugspezifischer Rahmen andere Längs- und Querrahmenelemente aufweist und die jeweiligen Mechanikkomponenten direkt an diesen zu montieren sind, was erst nach der Fertigstellung des Rahmens erfolgt.

Aus der EP 0 455 975 A2 geht ein Baukastensystem für einen Rahmen eines Schiebe- oder Schiebehebedaches hervor, wobei der Rahmen mehrteilig ausgebildet und aus als Strangpressprofilteile ausgelegten Seitenteilen, einem Vorderteil sowie einem Querteil zusammengesetzt ist. Dieser Rahmen ist an einer Dachöffnung eines Kraftwagenrohbaus zu befestigen. An den Seitenteilen sind Führungen ausgebildet, in welchen biegesteife Antriebskabel und Führungsglieder für einen bewegbaren Deckel geführt sind. Nachteilig bei diesem Baukastensystem ist, dass eine Anpassung des Rahmens an verschiedene Fahrzeugtypen nur durch Skalierung der Rahmengröße möglich ist und dadurch eine Anpassung an unterschiedlich geformte Fahrzeugdächer nicht möglich ist. Demgegenüber unterscheidet sich das aus der DE 10 2012 010 999 A1 hervorgehende Baukastensystem eines Schiebe- oder Hebedaches für Fahrzeugdächer dadurch, dass für jeden Fahrzeugdachtyp anstelle eines mehrteiligen Rahmens jeweils ein einteiliger Rahmen zur Aufnahme eines Deckelelements vorgesehen ist, wobei die Variation der Geometrie des Rahmens und des Deckelelements dadurch realisiert ist, dass ein erstes Deckelelement und ein zugehöriger erster Rahmen mit wenigstens einem jeweiligen, ersten Werkzeugteil eines jeweiligen Werkzeugs hergestellt werden, während ein zweites Deckelelement und ein zugehöriger zweiter Rahmen mit einem jeweiligen, zweiten Werkzeugteil des jeweiligen Werkzeugs hergestellt werden. Aufgrund der als austauschbare Wechseleinsätze ausgebildeten Werkzeugteile können also die Deckelelemente ebenso wie die Rahmen trotz ihrer unterschiedlichen Geometrien mit dem jeweils gleichen Werkzeug hergestellt werden. Auch hier ist kostengünstige Anpassung des Rahmens an verschiedene Fahrzeugdachformen nur bedingt und in engen Grenzen möglich.

Es werden erfindungsgemäß ein Dachmodul mit den Merkmalen des Anspruchs 1 sowie durch ein Baukastensystem mit den Merkmalen des Anspruchs 6 vorgeschlagen. Vorteilhafte Ausgestaltungen der Erfindung sind Gegenstand der abhängigen Ansprüche.

Das erfindungsgemäße Dachmodul umfasst einen Rahmen, welcher aus jeweiligen, die Größe des Rahmens bestimmenden Längsrahmenelementen und Querrahmenelementen zusammengesetzt ist, welche die Verbindung des Dachmoduls zu korrespondierenden, kraftwagenrohbauseitigen Dachrahmenelementen bilden, und wenigstens ein Deckelelement, welches durch den Rahmen aufgenommen ist.

Durch die Teilung des Rahmens in jeweilige Längsrahmenelemente und Querrahmenelemente ist es dabei zunächst auf einfache Weise möglich, den Rahmen auf unterschiedliche Rohbauöffnungen von Fahrzeugdächern anzupassen. Diese Art der Unterteilung hat sich nämlich als besonders vorteilhaft gezeigt, um eine einfache und kostengünstige Anpassungen des Rahmens in Fahrzeuglängsrichtung und in Fahrzeugquerrichtung vorzunehmen.

Das Dachmodul zeichnet sich dadurch aus, dass wenigstens eines der Rahmenelemente in ein bauvariantenübergreifendes, über mehrere Bauvarianten des Dachmoduls einen einheitlichen Profilquerschnitt und die Führungsschiene zur geführten Verstellung des bewegbaren Deckelements aufweisendes Funktionsteil und ein bauvariantenspezifisches Rahmenteil unterteilt ist, wobei das Funktionsteil und das Rahmenteil separat ausgebildet und mittels mechanischer Verbindungselemente miteinander verbunden sind. Unter dem Funktionsteil ist dabei derjenige Teil zu verstehen, in welchem entsprechende Mechanikkomponenten für ein oder mehrere mechanisch bewegbare Deckelelemente untergebracht sind. Insbesondere sind unter diesen Mechanikkomponenten entsprechende Führungsschienen für das bewegbare Deckelelement, Führungsrohre oder dergleichen Komponenten zur Verlegung jeweiliger Antriebskabel beziehungsweise sonstiger Antriebsmittel des jeweiligen Deckelelementes sowie Bauteile eines Windabweisers oder dergleichen zu verstehen. Natürlich können auch andere mechanische Elemente und Funktionsteile hierunter verstanden werden. Diese Mechanikkomponenten sollen vorzugsweise im Funktionsteil zusammengefasst sein, welches seinerseits bauvariantenübergreifend für eine Mehrzahl von Bauvarianten des Dachmoduls eingesetzt werden, wobei insbesondere lediglich die Länge und gegebenenfalls die auf die Dachkrümmung abgestimmte Wölbung bauvariantenspezifisch angepasst werden, wohingegen insbesondere beispielsweise jeweilige Profilquerschnitte oder dergleichen für eine Vielzahl von Bauvarianten identisch ausgebildet sind.

Bei einem Festdach, bei dem offensichtlich keine Mechanikkomponenten zum Einsatz kommen, könnte gegebenenfalls auf den Funktionsteil verzichtet werden, falls dieser separat ausgebildet ist, oder es kann ein Funktionsteil zur Halterung des festen Deckelelementes zum Einsatz kommen. Jedenfalls soll wenigstens ein bauvariantenspezifischer Rahmenteil so ausgebildet sein, dass an ihm ein bauvariantenübergreifender Funktionsteil lösbar oder unlösbar, einteilig oder mehrteilig, befestigbar ist.

Der jeweilige bauvariantenspezifische Rahmenteil ist dabei insbesondere als Blechpressteil oder auch gegebenenfalls als Kunststoffteil gestaltet, mittels welchem beispielsweise der jeweilige Funktionsteil mit dem entsprechenden fahrzeugseitigen Rahmenelementen, welche die Rohbauöffnung zum Einsetzen des Dachmoduls bilden, verbunden werden können. Mit anderen Worten dienen diese bauvariantenspezifischen Rahmenteile neben der Verbindung des Funktionsteils mit dem Rohbau des Kraftwagens insbesondere zur Anpassung des Dachmoduls an die jeweilige Dachform des Fahrzeugdachs, und demzufolge zur entsprechenden Anpassung des jeweiligen Dachmoduls. Diese bauvariantenspezifischen Rahmenteile können individuell je nach Bauvariante des Dachmoduls gefertigt werden und innerhalb des Baukastensystems sowohl hinsichtlich des Werkstoffes als auch der Dimensionen und Ausgestaltungen variieren.

Insgesamt ist somit erkennbar, dass die vorliegende Erfindung zwei wesentliche Grundgedanken umfasst. Einerseits soll der Rahmen so in jeweilige Längsrahmenelemente und Querrahmenelemente unterteilt sein, dass modular eine jeweilige Größe des Rahmens erzeugt werden kann. Dies ermöglicht ein hohes Maß an Anpassbarkeit des jeweiligen Dachmoduls an unterschiedliche Bauvarianten. Andererseits soll wenigstens eines dieser besagten Rahmenelemente in einen Funktionsteil unterteilt sein, welcher bei diversen Bauvarianten insbesondere von öffenbaren Dächern eingesetzt werden kann und im Wesentlichen alle Mechanikkomponenten für ein bewegbares Deckelelement umfasst, um eine entsprechende Integration und Standardisierung zu erreichen. Um die jeweilige Anpassung des Dachmoduls an die jeweilige Bauvariante beziehungsweise an die jeweilige Rohbauöffnung innerhalb des Fahrzeugdachs des entsprechenden Fahrzeugs zu ermöglichen, dient im Wesentlichen der zugehörige bauvariantenspezifische Rahmenteil, welches entsprechend wenig beziehungsweise keine Technikkomponenten umfasst, so dass es in einfacher Weise geometrisch und hinsichtlich seines Werkstoffs variiert werden kann.

Die Verbindung von bauvariantenübergreifendem Funktionsteil und bauvariantenspezifischem Rahmenteil des entsprechenden Rahmenelements, welche separat ausgebildet und miteinander verbunden sind, kann über entsprechende Fügeverbindungen erfolgen. Gleichfalls wäre es jedoch auch denkbar, ein Teil, insbesondere den Rahmenteil, gegebenenfalls jedoch auch den Funktionsteil, aus einem Kunststoff zu gestalten, in welchem der andere Teil, insbesondere der Funktionsteil, eingegossen oder an diesen angegossen ist. Diese zwei Verbindungsvariante sind aber kein Teil der Erfindung.

In weiterer Ausgestaltung der Erfindung sind die jeweiligen bauvariantenübergreifenden Funktionsteile und die zugehörigen bauvariantenspezifischen Rahmenteile aller Rahmenelemente des jeweiligen Dachmoduls in einer einheitlichen Fügerichtung miteinander verbunden. Hierdurch ergibt sich fertigungstechnisch eine besonders einfache und günstige Herstellung des Dachmoduls.

Eine weitere vorteilhafte Ausführungsform der Erfindung sieht vor, dass der bauvariantenübergreifende Funktionsteil des entsprechenden Rahmenelements einen bauvariantenübergreifenden Querschnitt aufweist und in Länge und Wölbung auf die Bauvariante des Dachmoduls angepasst ist. Demzufolge können als bauvariantenübergreifende Funktionsteile möglichst standardisierte Bauelemente eingesetzt werden, welche einen einheitlichen Querschnitt aufweisen und lediglich in Länge und Wölbung auf die jeweilige Bauvariante des Dachmoduls abgestimmt werden müssen.

Eine weitere vorteilhafte Ausführungsform sieht vor, dass der bauvariantenspezifische Rahmenteil des entsprechenden Rahmenelements in Geometrie und Werkstoff auf die jeweilige Bauvariante des Dachmoduls angepasst ist. Das bauvariantenspezifische Rahmenteil ist somit insbesondere geeignet, unterschiedliche Geometrien und Eigenschaften des jeweiligen Rahmens in Abhängigkeit der entsprechenden Bauvariante des Dachmoduls herzustellen.

Erfindungsgemäß ist vorgesehen, dass der bauvariantenübergreifende Funktionsteil des entsprechenden Längsrahmenelementes zumindest die jeweilige Führungsschiene umfasst. Gerade die Führungsschiene auf der jeweiligen Seite der Dachöffnung innerhalb des Dachmoduls eignet sich besonders als Teil des bauvariantenübergreifenden Funktionsteils, so dass diese lediglich in Länge und Krümmung auf das zugehörige Deckelelement beziehungsweise das entsprechende Dachmodul abgestimmt werden müssen.

Eine weitere vorteilhafte Ausführungsform sieht vor, dass dem vorderen Querrahmenelement ein bauvariantenübergreifendes Technikmodul zugeordnet ist.

Dieses Technikmodul kann insbesondere Teil des Funktionsteils des vorderen Querrahmenelements sein. Dabei umfasst dieses Technikmodul vorzugsweise eine Windabweisereinrichtung samt zugehörigem Windabweiserkasten, einen entsprechenden Antrieb und entsprechende Führungsrohre für Antriebskabel, um hierbei eine möglichst große Standardisierung zu erreichen.

Die vorstehend im Zusammenhang mit dem erfindungsgemäßen Dachmodul genannten Vorteile gelten in eben solcher Weise für das Baukastensystem gemäß Anspruch 6.

Weitere Vorteile und Einzelheiten der Erfindung ergeben sich aus der nachfolgenden Beschreibung bevorzugter Ausführungsbeispiele sowie anhand der Zeichnung. Dabei zeigen:

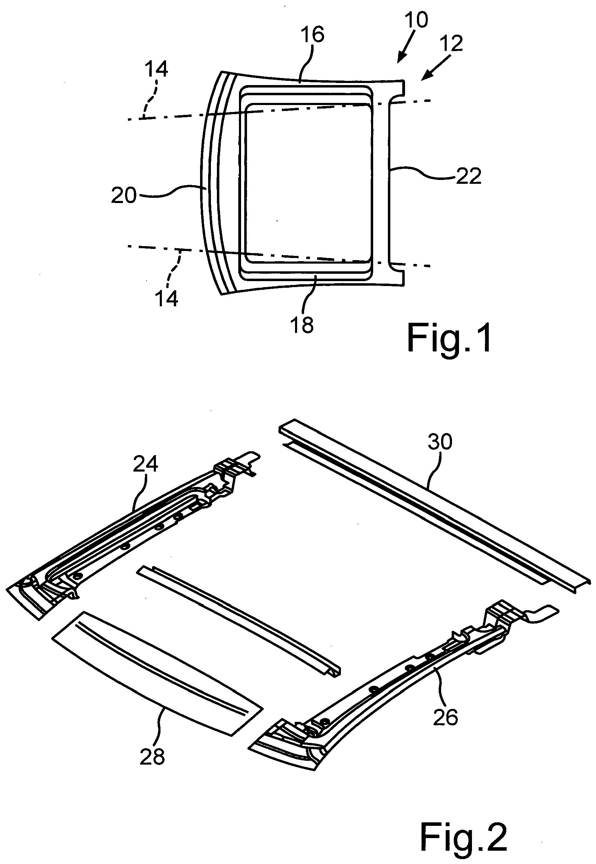

- Fig. 1: eine schematische Draufsicht auf einen Rahmen eines Dachmoduls mit angedeuteten Trennlinien, an welchen der Rahmen in jeweilige Längsrahmenelemente und Querrahmenelemente unterteilt ist;
- Fig. 2: eine Perspektivansicht auf den Rahmen des Dachmoduls analog zu Fig. 1, wobei wenigstens eines der Längs- oder Querrahmenelemente in einen hier dargestellten bauvariantenspezifischen Rahmenteil und einen nicht dargestellten bauvariantenübergreifenden Funktionsteil unterteilt ist;

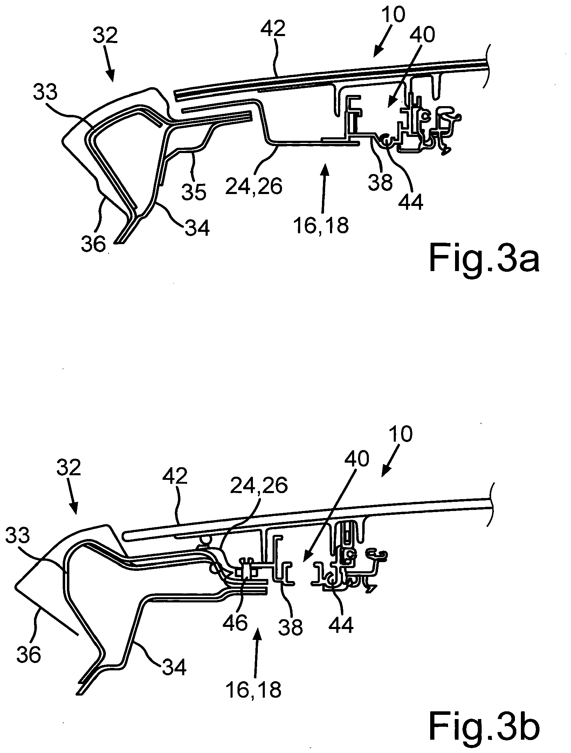

- Fig. 3a, 3b: jeweilige Schnittansichten entlang einer in Fahrzeugquerrichtung und in Fahrzeughochrichtung verlaufenden Schnittebene durch das am entsprechenden Dachrahmenelement des Fahrzeugrohbaus angeordnete Dachmodul, wobei ein bauvariantenspezifisches Rahmenteil und ein sich daran anschließendes bauvariantenübergreifendes Funktionsteil des entsprechenden Längsrahmenelements in zwei Ausführungsformen erkennbar ist;

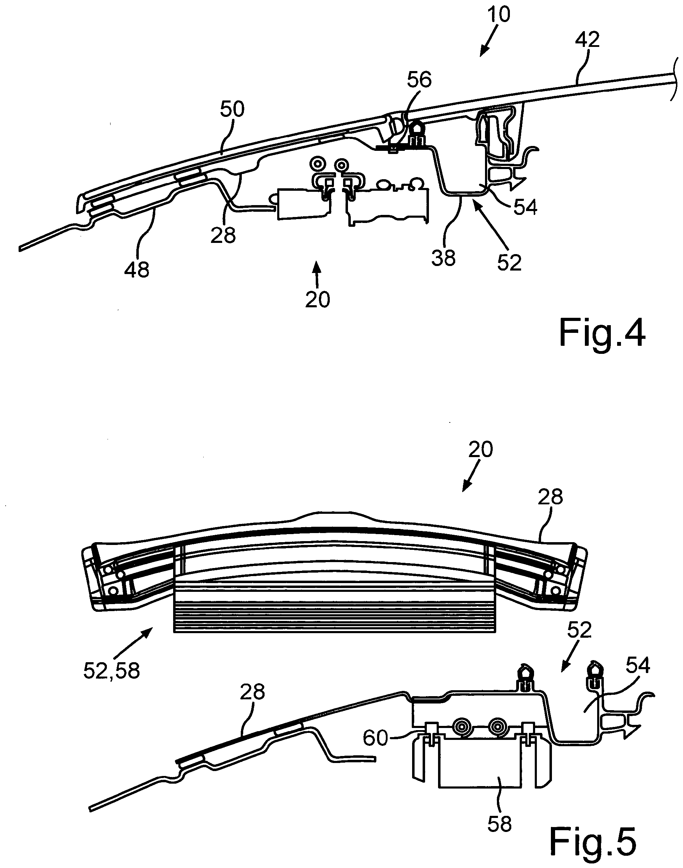

- Fig. 4: eine Schnittansicht durch das Dachmodul im Bereich eines sich an einem oberen Windschutzscheibenquerträger anschließenden Bereichs des Rahmens, wobei ein entsprechendes Querrahmenelement wiederum in einen bauvariantenspezifischen Rahmenteil und einen bauvariantenübergreifenden Funktionsteil unterteilt ist;
- Fig. 5: eine Draufsicht sowie eine Schnittansicht entlang einer in Fahrzeuglängsrichtung beziehungsweise in Fahrzeughochrichtung verlaufenden Schnittebene durch ein bauvariantenspezifisches Rahmenteil eines vorderen Querrahmenelements mit einem bauvariantenspezifischen Rahmenteil und einem bauvariantenübergreifenden Funktionsteil nach einer ersten Ausführungsform;

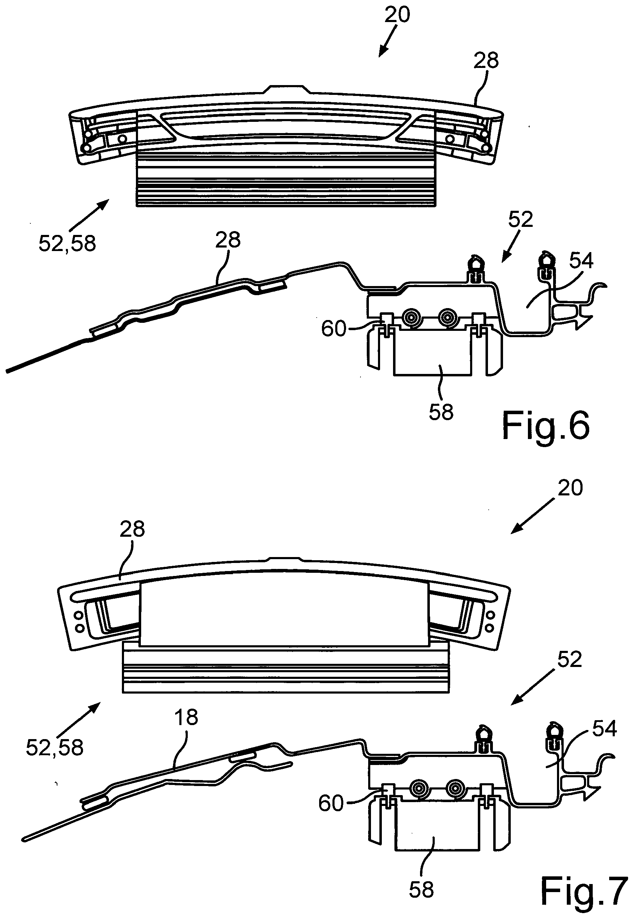

- Fig.6: eine Draufsicht sowie eine Schnittansicht entlang einer in Fahrzeuglängsrichtung beziehungsweise in Fahrzeughochrichtung verlaufenden Schnittebene durch ein bauvariantenspezifisches Rahmenteil eines vorderen Querrahmenelements mit einem bauvariantenspezifischen Rahmenteil und einem bauvariantenübergreifenden Funktionsteil nach einer zweiten Ausführungsform; und in
- Fig. 7: eine Draufsicht sowie eine Schnittansicht entlang einer in Fahrzeuglängsrichtung beziehungsweise in Fahrzeughochrichtung verlaufenden Schnittebene durch ein bauvariantenspezifisches Rahmenteil eines vorderen Querrahmenelements mit einem bauvariantenspezifischen Rahmenteil und einem bauvariantenübergreifenden Funktionsteil nach einer dritten Ausführungsform.

In Fig. 1 ist in einer schematischen Draufsicht ein Dachmodul 10 für einen Personenkraftwagen dargestellt. Dieses Dachmodul 10 ist in unterschiedlichsten Bauvarianten gestaltbar und in eine jeweilige Rohbauöffnung eines Fahrzeugdachs eines Personenkraftwagens einsetzbar und befestigbar. Die Rohbauöffnung im Rohbau des Fahrzeugs wird dabei üblicher Weise durch seitliche Dachrahmen und vorne und hinten durch jeweilige Dachquerträger begrenzt.

Das Dachmodul 10 kann insbesondere ein sogenanntes Panoramadach beinhalten, bei welchem die im Weiteren noch näher beschriebenen Deckelelemente durchsichtig sind, wobei wenigstens ein Deckelelement nach außen ausstellbar und über ein anderes Deckelelement bewegbar ist. Das Dachmodul 10 kann jedoch auch ein konventionelles Schiebe- und/oder Hebedach umfassen mit einem Deckelelement, welches entsprechend ausstellbar und verschiebbar ist. Ebenso kann das Dachmodul 10 auch ein Lamellendach mit einer Mehrzahl von Dachlamellen als Deckelelemente umfassen, welche fächerartig öffenbar sind. In einer einfachsten Ausführungsform kann das Dachmodul 10 auch lediglich ein festes Deckelelement, welches beispielsweise aus Blech oder Kunststoff gefertigt ist, umfassen. Ein derartiges Dachmodul 10 bildet somit ein Festdach, welches nicht zu öffnen ist. Generell sind dem Fachmann hier eine Vielzahl von Dachmodulen 10 bekannt, welche entweder geschlossen oder aber öffenbar sind, welche prinzipiell hier zum Einsatz kommen können.

Von dem Dachmodul 10 ist in Fig. 1 lediglich ein Rahmen 12 erkennbar, da jeweilige, im Weiteren noch näher erläuterte Deckelelemente, welche durch den Rahmen 12 aufgenommen sind, vorliegend weggelassen sind. Der Rahmen 12 ist im vorliegenden Fall aus einer Mehrzahl von Rahmenelementen zusammengesetzt, wobei entsprechende Trennstellen zwischen den Rahmenelementen durch strichpunktierte Linien 14 gekennzeichnet sind. Demzufolge umfasst der vorliegend etwa rechteckförmige Rahmen 12 zwei Längsrahmenelemente 16, 18 sowie ein vorderes und ein hinteres Querrahmenelement 20, 22. Der gesamte Rahmen 12 ist vorliegend modulartig beziehungsweise als Baukastensystem aufgebaut, so dass unterschiedlichste Rahmenelemente 16 bis 20 hinsichtlich ihrer Länge, Wölbung, Konfiguration oder dergleichen zum Einsatz kommen können.

Fig. 2 zeigt in einer Perspektivansicht von den jeweiligen Längsrahmenelementen und Querrahmenelementen 16 bis 22 einen jeweiligen, bauvariantenspezifischen Rahmenteil 24 bis 30. Dies bedeutet, dass jedes der Rahmenelemente 16 bis 22 einen bauvariantenspezifischen Rahmenteil 24 bis 30 umfasst, welche beispielsweise als Blechpressteile, als Kunststoffteile oder aber in anderer, vorzugweise einfacher Fertigung hergestellt werden können. Dabei ist in Fig. 2 die gewünschte Trennung der Rahmenteile 24 bis 30 analog zur in Fig. 1 dargestellten Trennung der Rahmenelemente 16 bis 22 dargestellt.

Wenigstens eines dieser in Fig. 2 gezeigten Rahmenteile 24 bis 30 ist um einen bauvariantenübergreifenden Funktionsteil ergänzt, von welchem entsprechende Ausführungsformen in den weiteren Figuren erläutert sind.

Die Fig. 3a und 3b zeigen zur Erläuterung des jeweiligen Funktionsteils jeweils eine ausschnittsweise Schnittansicht entlang einer in Fahrzeughochrichtung beziehungsweise in Fahrzeugquerrichtung verlaufenden Schnittebene durch das Dachmodul 10 im Bereich eines der seitlichen Längsrahmenelemente 16 beziehungsweise 18, welche an einem seitlich jeweils korrespondierenden Dachrahmenelement 32 der Personenkraftwagenkarosserie befestigt ist. Somit begrenzt dieses Dachrahmenelement 32 an entsprechender Stelle die Rohbauöffnung, in welche das jeweilige Dachmodul 10 eingesetzt wird. Das Dachrahmenelement 32 ist dabei im Wesentlichen aus zwei inneren Schalenelementen 33, 34, einer Verstärkung 35 sowie einer äußeren Beplankung 36 gebildet.

In Zusammenschau der Fig. 3a und 3b ist dabei ersichtlich, dass der jeweilige Rahmenteil 24 oder 26 des entsprechenden Längsrahmenelements 16, 18 die Verbindung des Dachmoduls 10 zum seitlich korrespondierenden, rohbauseitigen Dachrahmenelement 32 bildet. Da in den Fig. 3a und 3b jeweilige Dachmodule 10 in unterschiedlichen Bauvarianten gezeigt sind, welche demzufolge für unterschiedliche Fahrzeugdächer (Festdach, Panoramadach, Schiebe-/Hebedach) oder für unterschiedliche Fahrzeugbaureihen mit dementsprechend variierenden Dachöffnungen im Fahrzeugrohbau vorgesehen sind, sind demzufolge die jeweiligen Rahmenteile 24, 26 entsprechend unterschiedlich in Breite und Länge gestaltet, um somit eine Anpassbarkeit des jeweiligen, bauvariantenspezifischen Dachmoduls 10 zu erreichen. Während die jeweiligen Rahmenteile 24, 26 demzufolge bauvariantenspezifisch insbesondere in Breite, Länge, Werkstoff und/oder Wölbung variieren, umfassen die jeweiligen Längsrahmenelemente 16, 18 außerdem einen jeweiligen Funktionsteil 38, welcher bauvariantenübergreifend für eine Mehrzahl beziehungsweise Vielzahl von Dachmodulen 10 zum Einsatz kommen soll. Der demgemäß bauvariantenübergreifende Funktionsteil 38 umfasst vorliegend eine Führungsschiene 40 für ein Deckelelement 42, welches vorliegend ausstellbar und entlang der korrespondierenden Führungsschiene 40 verfahrbar ist. Demzufolge handelt es sich vorliegend um ein sogenanntes Panoramadach, welches durch das Dachmodul 10 bereitgestellt wird. Am Funktionsteil 38 ist neben der Führungsschiene 40 außerdem ein Führungsrohr 44 für ein Antriebskabel zum Verstellen des Deckelelements 42 vorgesehen. Außerdem können noch weitere Umlenkungen, Lagerungen oder dergleichen Mechanikelemente oder andere technische Elemente im Bereich dieses Funktionsteils 38 vorgesehen sein. Der Funktionsteil 38 zeichnet sich dabei dadurch aus, vorzugsweise einen identischen Profilquerschnitt über mehrere Bauvarianten aufzuweisen. Lediglich in seiner Länge und Wölbung kann der Funktionsteil 38 auf das jeweilige Dachmodul 10 beziehungsweise Fahrzeugdach abgestimmt sein.

In Zusammenschau der Fig. 3a und 3b ist demzufolge erkennbar, dass der jeweilige Rahmenteil 24 oder 26 unterschiedliche Breiten beziehungsweise Querschnitte aufweisen kann und in unterschiedlicher Weise mit dem Dachrahmenelement 32 verbunden sein kann. Demzufolge ist das jeweilige Rahmenteil 24 beziehungsweise 26 spezifisch auf die jeweilige Bauvariante des Dachmoduls 10, also auf deren Ausgestaltung beispielsweise als Festdach, als Panoramadach oder als Schiebe-/Hebedach oder aber auf deren Abstimmung an das jeweilige Fahrzeugdach, angepasst. Der mit dem jeweiligen Rahmenteil 24 oder 26 verbundene Funktionsteil 38 hingegen ist über mehrere Bauvarianten des Dachmoduls 10 einheitlich gestaltet und vorzugsweise allenfalls im Hinblick auf dessen Länge und Wölbung alternativ ausgestaltet. Darüber hinaus können bauvariantenspezifisch Zusatzteile im Bereich des Funktionsteils 38 vorgesehen sein, beispielsweise wenn ein zusätzliches Rollo oder ein Windabweiser vorgesehen ist, welcher eine zusätzliche Führung oder zusätzliche Mechanikelemente benötigt. Insoweit kann der Funktionsteil 38 dann modular um weitere Bauelemente ergänzt sein.

Darüber hinaus ist aus den Fig. 3a und 3b erkennbar, dass der jeweilige Rahmenteil 24, 26 und der zugehörige Funktionsteil 38 vorliegend separat ausgebildet und entweder durch eine Fügeverbindung (Fig. 3a) und/oder eine mechanische Verbindung mit entsprechenden Schraubelementen 46 (Fig. 3b) miteinander verbunden sind. Im Ausführungsbeispiel gemäß Fig. 3b sind dabei vorzugsweise alle Verbindungen beziehungsweise Schrauben 46 zwischen den jeweiligen Rahmenteilen 24 bis 30 und den zugehörigen Funktionsteilen 38 in einer einheitlichen Fügerichtung - vorliegend der Fahrzeughochrichtung - miteinander verbunden. Dies ermöglicht eine einfache Herstellung des Dachmoduls 10.

Fig. 4 zeigt in einer ausschnittsweisen Schnittansicht entlang einer in Fahrzeuglängsrichtung beziehungsweise in Fahrzeughochrichtung verlaufenden Schnittebene die Anbindung eines möglichen Dachmoduls 10 unter Vermittlung des vorderen Querrahmenelements 20 an einen oberen Windschutzscheibenquerträger beziehungsweise Dachrahmenquerträger 48 der Kraftwagenkarosserie. Dabei ist erkennbar, dass das vorliegende Dachmodul 10 neben einem Deckelelement 42 ein weiteres Deckelelement 50 aufweist, welches fest an einem darunter angeordneten bauvariantenspezifischem vorderen Rahmenteil 28 angebracht ist. Während also das hintere Deckelelement 42 als verstellbares Deckelelement des Panoramadachs ausgebildet ist, ist das vordere Deckelelement 50 fest ausgebildet. Gegebenenfalls wäre es jedoch auch denkbar, dieses Deckelelement 50 als Windabweiser oder dergleichen zu gestalten.

Rückwärtig an das bauvariantenspezifische Rahmenteil 28 schließt sich im vorliegenden Fall wiederum ein Funktionsteil 52 an, welches vorliegend einen Windabweiserkasten 54 umfasst. Der Funktionsteil 52 ist dabei mit dem Rahmenteil 28 über in Fahrzeughochrichtung verlaufende mechanische Verbindungselemente, welche vorliegend als Stanzniete 56 ausgebildet ist, verbunden. Während im vorliegenden Fall der Rahmenteil 28 je nach Bauvariante des Dachmoduls 10 sowohl in Breite als auch Länge und Wölbung und gegebenenfalls auch hinsichtlich des Querschnitts und des Werkstoffs variieren können, ist der Funktionsteil 52 wiederum über mehrere Bauvarianten hinweg im Wesentlichen einheitlich gestaltet. Dies bedeutet, dass im vorliegenden Fall über mehrere Bauvarianten des Dachmoduls 10 ein einheitlicher Profilquerschnitt verwendet wird, wobei der Funktionsteil 52 des Querrahmenelements 20 beispielsweise hinsichtlich seiner Länge und Wölbung auf die Geometrie des Dachmoduls 10 beziehungsweise der Rohbauöffnung innerhalb des Fahrzeugdachs abgestimmt sein kann.

Insgesamt ist somit anhand der Fig. 3a bis 4 erkennbar, dass vorliegend ein jeweiliges Dachmodul 10 in verschiedensten Bauvarianten geschaffen werden kann, je nachdem, welche Art von Dach (Festdach, Panoramadach, Schiebe-/Hebedach) beziehungsweise welche Rohbauöffnung innerhalb des Fahrzeugdachs hinsichtlich der Größe, Wölbung oder dergleichen verschlossen werden soll. Zur Anpassung des jeweiligen Dachmoduls 10 beziehungsweise zur Schaffung diverser Bauvarianten werden die jeweiligen Rahmenteile 24 bis 30 der entsprechenden Längs- und Querrahmenelemente 16 bis 22 bauvariantenspezifisch variiert, wohingegen jeweilige Funktionsteile 38 beziehungsweise 52 bauvariantenübergreifend zum Einsatz kommen und beispielsweise lediglich in Länge und Wölbung angepasst werden.

Im Ergebnis ergibt sich somit einerseits durch die Unterteilung des Rahmens 12 in entsprechende Rahmenelemente 16 bis 22 eine entsprechende Anpassungsmöglichkeit auf die jeweilige Länge und Breite der Rohbauöffnung beziehungsweise des entsprechenden Dachmoduls 10, wohingegen die Variationsmöglichkeiten, welche durch das Baukastensystem mit entsprechenden Rahmenteilen 24 bis 30 und zugehörigen Funktionsteilen 38 und 50 gegeben sind, eine größtmögliche Integration entsprechender Mechanikfunktionen in die entsprechenden Rahmenelemente 16 bis 22 gewährleistet. Somit ist insgesamt ein Baukastensystem geschaffen, mittels welchem entsprechende Dachmodule 10 beziehungsweise Rahmen 12 in einfacher Weise bereitgestellt werden können.

Die Fig. 5 bis 7 zeigen schließlich in einer jeweiligen Draufsicht beziehungsweise einer jeweiligen ausschnittsweisen Schnittansicht entlang einer in Fahrzeuglängsrichtung beziehungsweise in Fahrzeughochrichtung verlaufenden Schnittebene jeweilige Ausgestaltungen entsprechender Dachmodule 10 im Bereich des vorderen Querrahmenelements 20.

In der jeweiligen Draufsicht ist dabei jeweils der entsprechende Rahmenteil 28 gezeigt, welcher in seiner Gestalt und Geometrie an das jeweilige Dachmodul 10 beziehungsweise die zugehörige Rohbauöffnung angepasst ist. Dieses jeweilige Rahmenelement 28 ist - wie es aus den entsprechenden Schnittansichten erkennbar ist - jeweils fest mit dem zugehörigen Windschutzscheibenquerträger 48 verbunden. Das jeweilige Rahmenelement 28 ist mit einem jeweils zugehörigen Funktionsteil 52 verbunden, welcher - analog zur Ausführungsform gemäß Fig. 4 - beispielsweise einen Windabweiserkasten 54 oder dergleichen umfasst.

In den vorliegenden Ausführungsbeispielen ist als Teil dieses Funktionsteils 52 außerdem ein sogenanntes Technikmodul 58 vorgesehen, welches hier beispielsweise den Antrieb, jeweilige Führungsrohre oder dergleichen umfasst. Das Technikmodul 58 kann dabei auch unmittelbar am korrespondierenden Rahmenelement 28 angesetzt sein beziehungsweise den Funktionsteil 52 bilden. Ebenso kann das Technikmodul 58 - wie im vorliegenden Fall - Teil des Funktionsteils 52 sein beziehungsweise an diesem befestigt sein. Die Befestigung des Technikmoduls 58 am korrespondierenden Funktionsteil 52 erfolgt im vorliegenden Fall über jeweilige Entkopplungselemente 60, welche beispielsweise aus einem elastischen Kunststoff oder dergleichen bestehen.

Das Technikmodul 58 ist vorzugsweise standardisiert und kann einheitlich bei diversen Bauvarianten des Dachmoduls 10 zum Einsatz kommen. Der Funktionsteil 52 kann beispielsweise als Kunststoffbauteil mit Aufnahmen für das Technikmodul 58 oder aber unmittelbar für einen Antrieb und entsprechende Kabelleitungen gestaltet sein. Im Ergebnis ist somit erkennbar, dass auch im vorliegenden Fall durch die jeweiligen Rahmenteile 28 eine entsprechend einfache Anpassung des Dachmoduls 10 an die jeweilige Rohbauöffnung ermöglicht ist, wobei das Rahmenteil 28 vorzugsweise selbst keine entsprechenden Mechanikkomponenten aufweist. Diese sind allesamt im Bereich des Funktionsteils 52 beziehungsweise des Technikmoduls 58 vorgesehen. Dieser Funktionsteil 52 beziehungsweise das jeweilige Technikmodul 58 sind dabei vorzugsweise standardisiert oder zumindest überwiegend standardisiert, das heißt lediglich in Länge und Wölbung anzupassen, um somit ein entsprechendes modulares Baukastensystem zu ermöglichen, welcher eine einfache Anpassung der entsprechenden Dachmodule 10 an deren Bauart beziehungsweise Größe der Rohbauöffnung erleichtert.

Schließlich sei angemerkt, dass der jeweilige Rahmenteil 24 bis 30 und der jeweilige Funktionsteil 38 und 52 entweder separat und miteinander gefügt ausgebildet sind oder aber einteilig gestaltet sind, wobei dann beispielsweise der eine Teil als Kunststoff und der andere Teil als Metallelement ausgebildet ist, welche zusammen ein Hybridbauteil - nämlich das jeweilige Rahmenelement 16 bis 22 - bilden.

## Patentansprüche

1. Dachmodul (10) für einen Kraftwagen, mit einem Rahmen (12), welcher aus jeweiligen, die Größe des Rahmens (12) bestimmenden Längsrahmenelementen (16,18) und Querrahmenelementen (20,22) zusammengesetzt ist, welche die Verbindung des Dachmoduls (10) zu korrespondierenden, kraftwagenrohbauseitigen Dachrahmenelementen (32,48) bilden, und mit wenigstens einem mittels mindestens einer Führungsschiene (40) geführt bewegbaren Deckelelement (42,50), welches durch den Rahmen (12) aufgenommen ist,
**dadurch gekennzeichnet, dass**
wenigstens eines der Rahmenelemente (16,18,20,22) in ein bauvariantenübergreifendes, über mehrere Bauvarianten des Dachmoduls (10) einen einheitlichen Profilquerschnitt und die Führungsschiene (40) für das Deckelelement (42,50) aufweisendes Funktionsteil (38,52) und ein bauvariantenspezifisches Rahmenteil (24-30) unterteilt ist, wobei das Funktionsteil (38,52) und das Rahmenteil (24-30) separat ausgebildet und mittels mechanischer Verbindungselemente miteinander verbunden sind.

2. Dachmodul (10) nach Anspruch 1,
**dadurch gekennzeichnet, dass**
die jeweiligen bauvariantenübergreifenden Funktionsteile (38, 52) und die zugehörigen bauvariantenspezifischen Rahmenteile (24 - 30) aller Rahmenelemente (16 - 22) in einer einheitlichen Fügerichtung miteinander verbunden sind.

3. Dachmodul (10) nach einem der vorhergehenden Ansprüche,
**dadurch gekennzeichnet, dass**
der bauvariantenübergreifende Funktionsteil (38) des entsprechenden Längsrahmenelementes (16, 18) zumindest jeweilige Mechanikelemente umfasst.

4. Dachmodul (10) nach einem der vorhergehenden Ansprüche,
**dadurch gekennzeichnet, dass**
der bauvariantenübergreifende Funktionsteil (52) des entsprechenden vorderen Querrahmenelementes (20) zumindest jeweilige Mechanikelemente umfasst.

5. Dachmodul (10) nach einem der vorhergehenden Ansprüche,
**dadurch gekennzeichnet, dass**
dem vorderen Querrahmenelement (20) ein bauvariantenübergreifendes Technikmodul (58) zugeordnet ist.

6. Baukastensystem für ein Dachmodul (10) für einen Kraftwagen, mit einer Mehrzahl von Rahmenelementen (16 - 22), aus welchen eine Mehrzahl von Bauvarianten eines Rahmens (12) zusammenzusetzen ist, und mit einer Mehrzahl von Bauvarianten von Deckelelementen (42, 50), von welchen wenigstens eines in der jeweils zugeordneten Bauvariante des Rahmens (12) aufgenommen ist, wobei die jeweilige Bauvariante des Rahmens (12) aus jeweiligen, die Größe des Rahmens (12) bestimmenden Längsrahmenelementen (16, 18) und Querrahmenelementen (20, 22) zusammen gesetzt ist, welche die Verbindung des Dachmoduls (10) zu korrespondierenden, kraftwagenrohbauseitigen Dachrahmenelementen bilden,
**dadurch gekennzeichnet, dass**
wenigstens eines der Rahmenelemente (16,18,20,22) in ein bauvariantenübergreifendes, über mehrere Bauvarianten des Dachmoduls (10) einen einheitlichen Profilquerschnitt und eine Führungsschiene (40) für das Deckelelement (42,50) aufweisendes Funktionsteil (38,52) und ein bauvariantenspezifisches Rahmenteil (24-30) unterteilt ist, wobei das Funktionsteil (38,52) und das Rahmenteil (24-30) separat ausgebildet und mittels mechanischer Verbindungselemente miteinander verbunden sind.

## Claims

1. Roof module (10) for a motor vehicle, with a frame (12) composed of respective longitudinal frame elements (16, 18) and transverse frame elements (20, 22), which determine the size of the frame (12) and form the connection of the roof module (10) to corresponding motor vehicle body frame-side roof frame elements (32, 48), and with at least one movable cover element (42, 50), which is guided by means of at least one guide rail (40) and accommodated by the frame (12),
**characterised in that**
at least one of the frame elements (16, 18, 20, 22) is divided into a construction variant-spanning functional part (38, 52) having a uniform profile cross-section across several construction variants of the roof module (10) and the guide rail (40) for the cover element (42, 50) and a construction variant-spanning frame part (24-30), wherein the functional part (38, 52) and the frame part (24-30) are formed separately and joined to one another by means of mechanical connecting elements.

2. Roof module (10) according to claim 1,
**characterised in that**
the respective construction variant-spanning functional parts (38, 52) and the associated construction variant-spanning frame parts (24-30) of all frame elements (16-22) are joined to one another in a uniform joining direction.

3. Roof module (10) according to any of the preceding claims,
**characterised in that**
the construction variant-spanning functional part (38) of the corresponding longitudinal frame element (16, 18) at least comprises respective mechanical elements.

4. Roof module (10) according to any of the preceding claims,
**characterised in that**
the construction variant-spanning functional part (52) of the corresponding front transverse frame element (20) at least comprises respective mechanical elements.

5. Roof module (10) according to any of the preceding claims,
**characterised in that**
a construction variant-spanning technical module (58) is assigned to the front transverse frame element (20).

6. Modular system for a roof module (10) for a motor vehicle, with a plurality of frame elements (16-22) from which a plurality of construction variants of a frame (12) can be put together and with a plurality of roof elements (42, 50) of which at least one is accommodated in the respectively associated construction variant of the frame (12), wherein the respective construction variant of the frame (12) is composed of respective longitudinal frame elements (16, 18) and transverse frame elements (20, 22), which determine the size of the frame (12) and form the connection of the roof module (10) to corresponding motor vehicle body frame-side roof frame elements,
**characterised in that**
at least one of the frame elements (16, 18, 20, 22) is divided into a construction variant-spanning functional part (38, 52) having a uniform profile cross-section across several construction variants of the roof module (10) and a guide rail (40) for the cover element (42, 50) and a construction variant-spanning frame part (24-30), wherein the functional part (38, 52) and the frame part (24-30) are formed separately and joined to one another by means of mechanical connecting elements.

## Revendications

1. Module de toit (10) pour un véhicule automobile, comprenant un cadre (12) qui est constitué d'éléments de cadre longitudinaux (16, 18) et d'éléments de cadre transversaux (20, 22) déterminant la taille du cadre (12), qui forment la liaison du module de toit (10) aux éléments de cadre de toit (32, 48) correspondants côté carrosserie, et comprenant au moins un élément de recouvrement (42, 50) mobile guidé au moyen d'au moins un rail de guidage (40), ledit élément de recouvrement étant logé dans le cadre (12), **caractérisé en ce qu'**au moins un des éléments de cadre (16, 18, 20, 22) est divisé en une partie fonctionnelle (38, 52) appartenant aux versions de construction, concernant plusieurs versions de construction du module de toit (10) présentant une section transversale de profil d'un seul tenant et le rail de guidage (40) pour l'élément de recouvrement (42, 50) et en une partie de cadre (24, 30) spécifique à la variante de construction, la partie fonctionnelle (38, 52) et la partie de cadre (24, 30) étant conçue séparément et étant reliées l'une à l'autre au moyen d'éléments de liaison mécaniques.

2. Module de toit (10) selon la revendication 1, **caractérisé en ce que** chacune des parties fonctionnelles appartenant à la version de construction (38, 52) et les parties de cadre correspondantes spécifiques à la version de construction (24-30) de tous les éléments de cadre sont reliées les unes aux autres dans une direction d'assemblage unique.

3. Module de cadre (10) selon l'une quelconque des revendications précédentes, **caractérisé en ce que** la partie fonctionnelle (38) appartenant à la version de construction de l'élément de cadre longitudinal (16, 18) correspondant comprend des éléments mécaniques respectifs.

4. Module de cadre (10) selon l'une quelconque des revendications précédentes, **caractérisé en ce que** la partie fonctionnelle (52) dépassant la version de l'élément de cadre transversal avant correspondant (20) comprend au moins des éléments mécaniques respectifs.

5. Module de cadre (10) selon l'une quelconque des revendications précédentes, **caractérisé en ce qu'**un module technique (58) appartenant à la version de construction est associé à l'élément de cadre transversal (20) avant.

6. Système modulaire pour un module de toit (10) pour un véhicule automobile, comprenant une pluralité d'éléments de cadre (16, 22), qui compose une pluralité de variantes de construction d'un cadre (12), et comprenant une pluralité de variantes de construction d'éléments de recouvrement (42, 50), dont au moins est logé dans la variante de construction correspondante du cadre (12), la variante de construction correspondante du cadre (12) étant constituée à partir de chacun des éléments de cadre longitudinaux (16, 18) déterminant la taille du cadre (12) et à partir des éléments de cadre transversaux (20, 22) qui forment la liaison du module de toit (10) aux éléments de cadre de toit (32, 48) correspondants côté carrosserie, et comprenant au moins un élément de recouvrement (42, 50) mobile guidé au moyen d'au moins un rail de guidage (40), ledit élément de recouvrement étant logé dans le cadre (12), **caractérisé en ce qu'**au moins un des éléments de cadre (16, 18, 20, 22) est divisé en une partie fonctionnelle (38, 52) appartenant aux versions de construction, concernant plusieurs versions de construction du module de toit (10) présentant une section transversale de profil d'un seul tenant et le rail de guidage (40) pour l'élément de recouvrement (42, 50) et en une partie de cadre (24, 30) spécifique à la variante de construction, la partie fonctionnelle (38, 52) et la partie de cadre (24, 30) étant conçue séparément et étant reliées l'une à l'autre au moyen d'éléments de liaison mécaniques.
